# EUROPÄISCHE PATENTSCHRIFT

(11) **EP 1 221 420 B1**
(45) Veröffentlichungstag und Bekanntmachung des Hinweises auf die Patenterteilung: **26.01.2005**
(21) Anmeldenummer: 01127220.0
(22) Anmeldetag: 16.11.2001
(51) Int. Cl.: B65G 49/04, B05C 3/10

(54) **Anlage zur Behandlung, insbesondere zum Lackieren, von Gegenständen, deren Geometrie eine Vorzugsrichtung aufweist**
Treatment device, especially for painting objects having a geometry with a preferred orientation
Dispositif de traitement, notamment pour la peinture d'objets ayant une géométrie avec une orientation préférentielle

(30) Priorität: 04.01.2001 DE 10100167
(43) Veröffentlichungstag der Anmeldung: 10.07.2002
(73) Patentinhaber: EISENMANN Maschinenbau GmbH & Co. KG, 71032 Böblingen (DE)
(72) Erfinder: Ehrenleitner, Franz, 70439 Stuttgart (DE); Weinand, Hans-Joachim, 71254 Ditzingen (DE)
(74) Vertreter: Ostertag, Ulrich, Dr.

(56) Entgegenhaltungen:
- DE-A- 19 641 048
- US-A- 2 598 201

## Beschreibung

Die Erfindung betrifft eine Anlage zur Behandlung, insbesondere zum Lackieren, von Gegenständen, deren Geometrie die Richtung einer Symmetrieachse oder einer Symmetrieebene oder eine Längsrichtung aufweist, insbesondere von Fahrzeugkarosserien, mit
a) mindestens einem Bad, in dem sich eine Behandlungsflüssigkeit, insbesondere ein Lack, befindet, in welche die Gegenstände eingetaucht werden sollen;
b) einer Fördereinrichtung, mit welcher die Gegenstände in einer kontinuierlichen oder intermittierenden Translationsbewegung in Transportrichtung durch die Anlage geführt werden können;
c) einer Vielzahl von Eintaucheinrichtungen, die mit der Fördereinrichtung verbunden sind, jeweils einen Gegenstand tragen und in der Lage sind, diesen Gegenstand durch eine Drehung um eine sich unter einem Winkel zur Transportrichtung erstreckende Drehachse vollständig in das Bad einzutauchen, wobei die Drehachse von dem Gegenstand beabstandet ist.

In der Praxis hat die Geometrie der meisten zu lackierenden Gegenstände die Richtung einer Symmetrieachse oder einer Symmetrieebene oder die Richtung einer größten Fläche oder längsten Dimension. Bei bekannten Anlagen der eingangs genannten Art, wie sie beispielsweise in der DE 196 41 048 C2 beschrieben sind, werden die Gegenstände in einer Orientierung durch die Anlage hindurchgeführt, in welcher ihre Längsrichtung parallel zur Transportrichtung steht.

Dies ist die herkömmliche Art, in welcher Fahrzeugkarosserien in der Automobilindustrie durch verschiedene Bearbeitungsstationen transportiert werden. Die Drehachse, um welche die Fahrzeugkarosserien zum Eintauchen in das oder die Bäder verdreht werden, liegt dabei senkrecht zur Bewegungsrichtung. Dies hat zur Folge, daß die Fahrzeugkarosserien senkrecht zu ihrer Vorzugsrichtung gesehen, also über ihre Breite hinweg, gleichmäßig in das Bad eintauchen, daß insbesondere die Vorderseite der Fahrzeugkarosserie flächig oder zumindest linienhaft beim Eintauchen in das Bad mit dem Badspiegel in Berührung kommt.
Dies kann mit einem erheblichen mechanischen Schlag verbunden sein. Die Weiterbewegung der Fahrzeugkarosserie in das Bad hinein ist wegen der ungünstigen Flüssigkeitsverdrängung mit einem erheblichen Kraftaufwand verbunden. Die Relativbewegung der Badflüssigkeit bei der Eintauchbewegung ist weitgehend parallel zu den Seitenflächen der Fahrzeugkarosserie, so daß diese verhältnismäßig schlecht angeströmt werden. Auch die Verdrängung von Luft aus Hohlräumen innerhalb der Fahrzeugkarosserie sowie die Benetzung von Innenflächen ist bei der bekannten Eintauchart nicht optimal.

Aus der US 2 598 201 A ist eine Anlage zur Behandlung von Fahrzeugkarosserien bekannt, bei der diese auf Schienen durch die Anlage geführt werden. Bei der Anlage werden flache Becken eingesetzt, die mit einer Behandlungsflüssigkeit gefüllt sind, in welche die Fahrzeugkarosserien nicht vollständig, sondern nur teilweise eingetaucht werden können. Dazu verlaufen die die Fahrzeugkarosserien tragenden Schienen am Eintauch-Ende der Bäder schräg nach unten in die Bäder hinein. Die Fahrzeugkarosserien werden in dem flachen Bad um eine senkrecht zur Transportrichtung stehende Drehachse gedreht, damit alle Bereiche der Fahrzeugkarosserie mit Behandlungsflüssigkeit benetzt werden können. Der Eintauchvorgang selbst ist von dieser Drehbewegung unabhängig. Die Drehachse verläuft bezogen auf die Längsrichtung der Fahrzeugkarosserie in einem schrägen Winkel durch diese hindurch. Bei der Anlage der US 2 598 201 A kann es vorkommen, daß die Fahrzeugkarosserie beim Eintauchen mit ihrer größten Fläche parallel zum Flüssigkeitsspiegel liegt. Dies ist strömungstechnisch extrem ungünstig.

Die GB 22 24 252 A beschreibt ein Hängefördersystem nach Art eines Schleppförderers, mit dem Fahrzeugkarosserien durch ein Behandlungsbad geführt werden können. Die Eintauchbewegung ist im einzelnen nicht erläutert. Die Konstruktion ist jedoch so, daß die Fahrzeugkarosserien nicht mit einer Drehbewegung sondern mit einer Schwenkbewegung in das Behandlungsbad eingebracht werden, wobei die Schwenkachse wieder senkrecht zur Förderrichtung verläuft.

Aufgabe der vorliegenden Erfindung ist es, eine Anlage der eingangs genannten Art so auszugestalten, daß der Eintauchvorgang kräftemäßig optimiert und die Benetzung der inneren und äußeren Flächen der zu lackierenden Gegenstände verbessert ist.

Diese Aufgabe wird erfindungsgemäß dadurch gelöst, daß
d) die Eintaucheinrichtungen so ausgebildet sind, daß in derjenigen Drehposition, in der die Richtung der Symmetrieachse oder der Symmetrieebene oder die Längsrichtung des Gegenstandes horizontal verläuft, die Transportrichtung unter einem schrägen Winkel zur Richtung der Symmetrieachse oder der Symmetrieebene oder zur Längsrichtung des Gegenstandes verläuft.

Unter einem "schrägen" Winkel wird hier ein Winkel verstanden, der weder 0 noch 90° ist. Bei einer solchen Ausrichtung der zu lackierenden Gegenstände gegenüber der Transportrichtung läßt sich im allgemeinen sowohl der Eintauchvorgang als auch die Bewegung der Gegenstände durch das Bad hindurch optimieren: So läßt sich fast immer eine Orientierung finden, bei welcher der Gegenstand mit einem Eck seiner Kontur so in die Behandlungsflüssigkeit eintaucht, daß letztere für den weiteren Eintauchvorgang strömungsgünstig zerteilt wird. Bei der Überlagerung der Translationsbewegung mit der Drehbewegung werden die Anströmwinkel ständig verändert, so daß z. B. Seitenflächen, die beim Stand der Technik parallel zur Bewegungsrichtung stehen würden, zumindest zeitweise direkt angeströmt werden können. Insgesamt entsteht in der Badflüssigkeit eine höhere Turbulenz. Durch die "Taumelbewegung", welche der zu lackierende Gegenstand beim Eintauchen in das Bad und beim Hindurchbewegen durch das Bad erfährt, lassen sich innere Flächen der zu behandelnden Gegenstände besser erreichen; Hohlräume lassen sich besser entlüften. Insgesamt wird der Behandlungsvorgang sehr viel effizienter als bei den bekannten Anlagen.

Eine Möglichkeit, die gewünschte Orientierung zwischen der Transportrichtung und der Richtung der Symmetrieachse oder der Symmetrieebene oder der Längsrichtung der zu behandelnden Gegenstände herbeizuführen, besteht darin, die Drehachse der verschiedenen Eintaucheinrichtungen in der Projektion auf eine horizontale Ebene unter einem schrägen Winkel zur Transportrichtung der Transporteinrichtung verlaufen zu lassen.

Alternativ oder zusätzlich ist es möglich, daß die Drehachse gegenüber der Horizontalen verkippt ist.

Eine dritte Möglichkeit ist die, daß der Gegenstand in der Eintaucheinrichtung so montiert ist, daß seine Richtung der Symmetrieachse oder der Symmetrieebene oder seine Längsrichtung unter einem schrägen Winkel zur Drehachse steht.

Besonders bevorzugt wird diejenige Ausgestaltung der Erfindung, bei welcher der Winkel zwischen der Transportrichtung und der Richtung der Symmetrieachse oder der Symmetrieebene oder der Längsrichtung der Gegenstände einstellbar ist. In diesem Fall kann der fragliche Winkel von Fall zu Fall exakt auf die Geometrie der jeweils zu lackierenden Gegenstände abgestimmt werden.

Ein Ausführungsbeispiel der Erfindung wird nachfolgend anhand der Zeichnung näher erläutert; es zeigen
- Figur 1:: einen perspektivischen Ausschnitt aus einer Tauchlackieranlage für Fahrzeugkarosserien;
- Figur 2:: einen Schnitt durch die Anlage von Figur 1 senkrecht zur Bewegungsrichtung der Fahrzeugkarosserien, gesehen von rechts unten;
- Figur 3:: eine Draufsicht auf die Anlage von Figur 1;
- Figur 4:: eine Seitenansicht des Ausschnittes der Lackieranlage von Figur 1;
- Figur 5:: eine Seitenansicht eines Transportwagens, der in der Lackieranlage verwendet wird, mit einer hieran befestigten Fahrzeugkarosserie;
- Figur 6:: eine perspektivische Ansicht des Transportwagens samt Fahrzeugkarosserie von Figur 5;
- Figur 7:: eine vergrößerte Detailansicht im Bereich des mit dem Buchstaben A gekennzeichneten Kreises von Figur 2;
- Figur 8:: eine vergrößerte Detailansicht im Bereich des mit dem Buchstaben B gekennzeichneten Kreises von Figur 2.

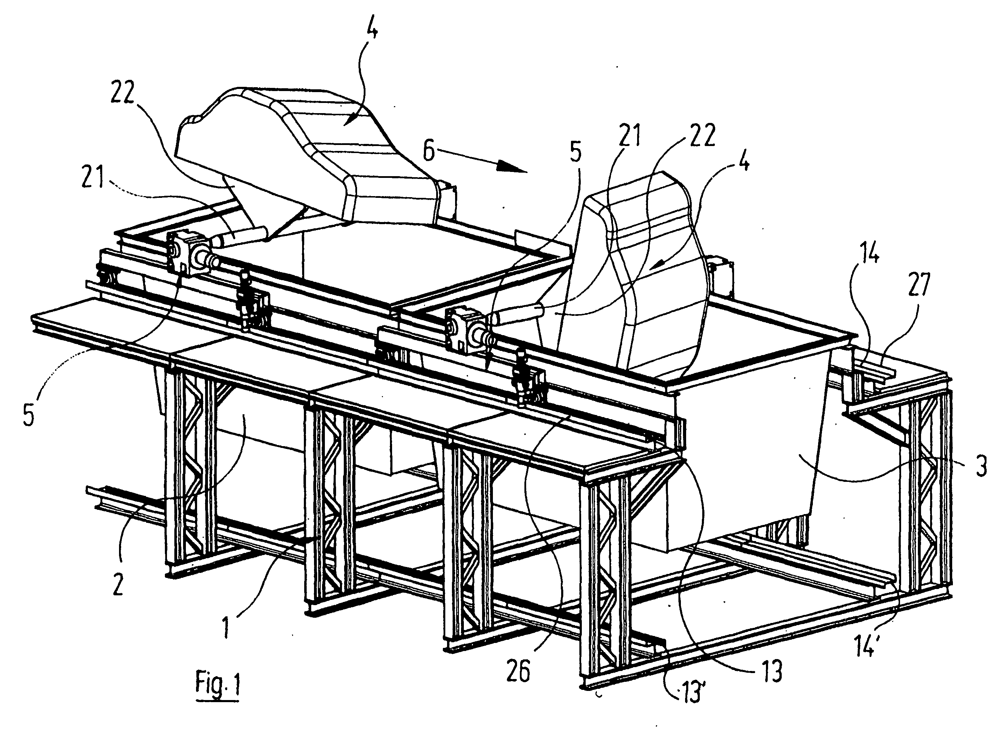

Die in der Zeichnung dargestellte Tauchlackieranlage für Fahrzeugkarosserien umfaßt eine eine Vielzahl von senkrechten Ständern und horizontalen Trägern aufweisende Stahlkonstruktion 1, in der zwei Badbehälter 2, 3 aufgehängt sind. Die Badbehälter 2, 3 sind bis zu einem bestimmten Spiegel mit flüssigem Lack angefüllt, in welche Fahrzeugkarossieren 4 eingetaucht werden sollen. Diese Fahrzeugkarosserien 4 werden hierzu mit Hilfe von einzelnen Transportwagen 5 in Richtung des Pfeiles 6 (vgl. Figur 1) transportiert, wobei diese Translationsbewegung der einzelnen Transportwagen 5 unabhängig voneinander erfolgen kann und im Zuge dieser unabhängigen Bewegungen Verlangsamungen, Beschleunigungen, Stopps und auch Bewegungsumkehrungen möglich sind. Insgesamt erfolgt jedoch ein Transport der Fahrzeugkarosserien 4 in Richtung des Pfeiles 6 von Figur 1.

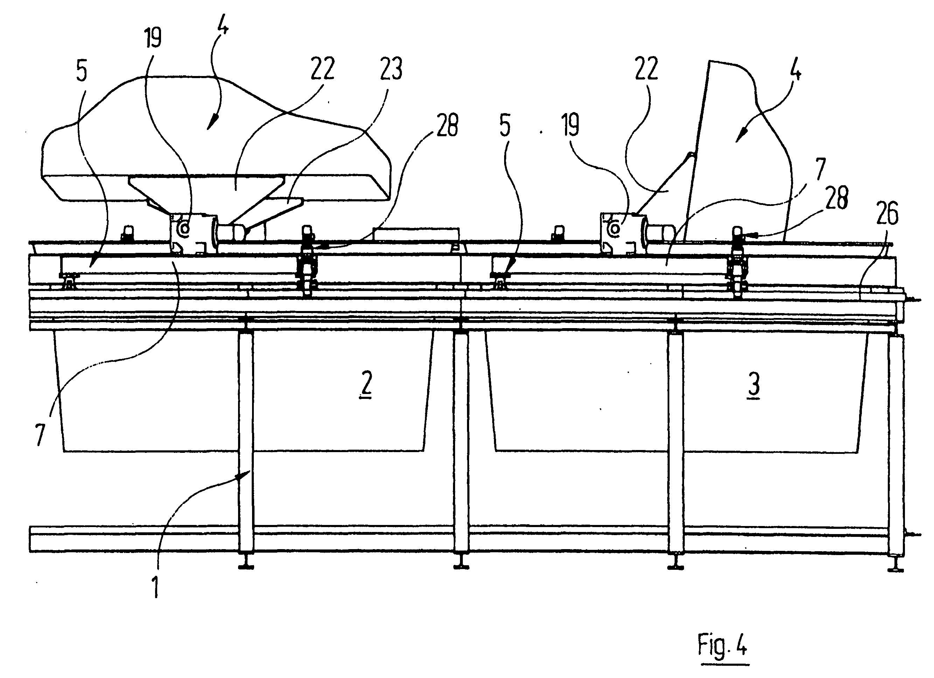

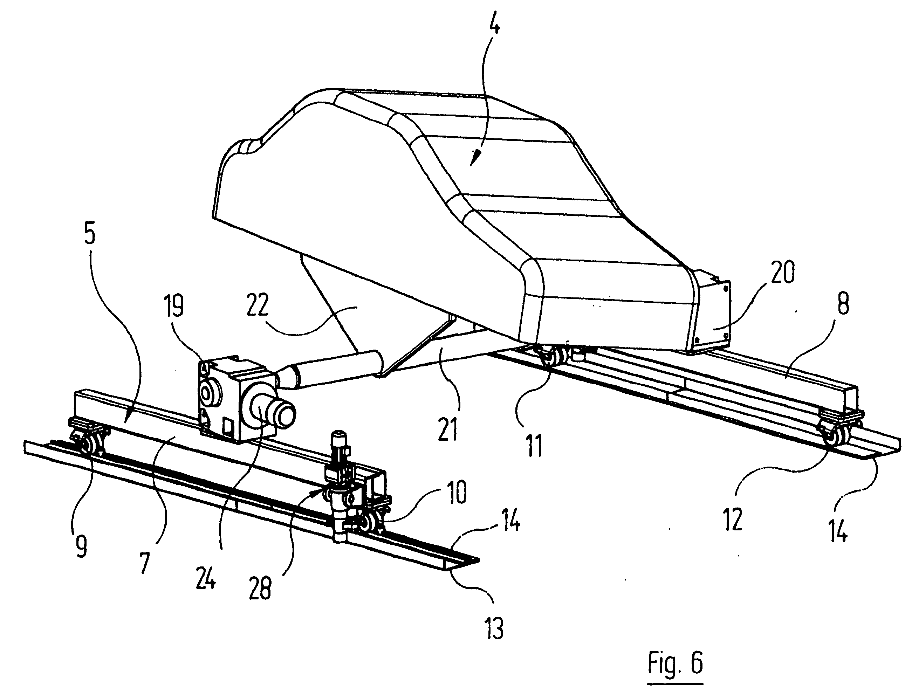

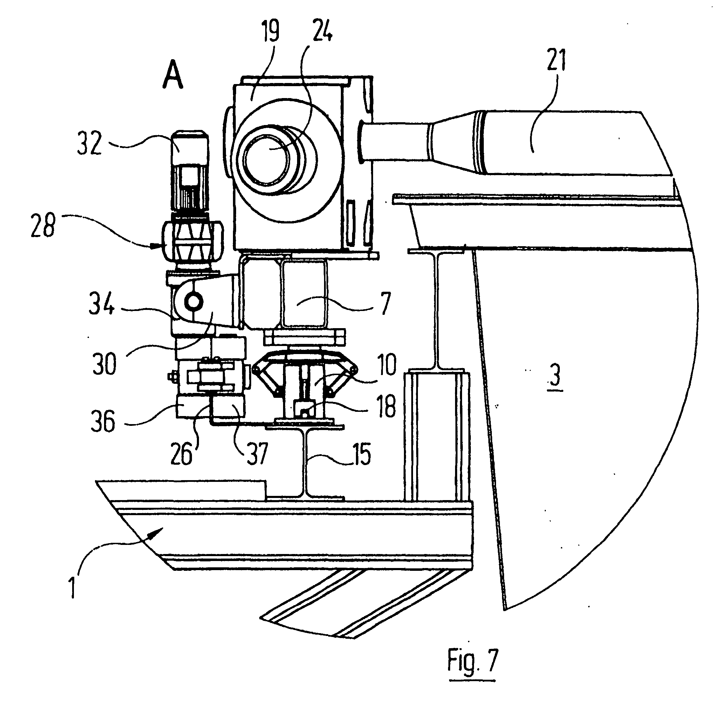

Die genaue Bauweise der Transportwagen 5 ist in den Figuren 4 bis 7 näher dargestellt. Wie insbesondere die Figur 6 zeigt, besitzt jeder Transportwagen 5 zwei Längstraversen 7, 8, an deren Unterseite jeweils zwei Doppelräder 9, 10 bzw. 11, 12 um eine horizontale Achse drehbar gelagert sind. Zusätzlich sind die Räder 9 bis 12 jeweils mit Hilfe eines in Einzelnen nicht dargestellten Drehschemels um eine vertikale Achse verdrehbar, so daß die Ausrichtung der Doppelräder 9 bis 12 gegenüber den jeweiligen Längstraversen 7, 8 verändert werden kann.

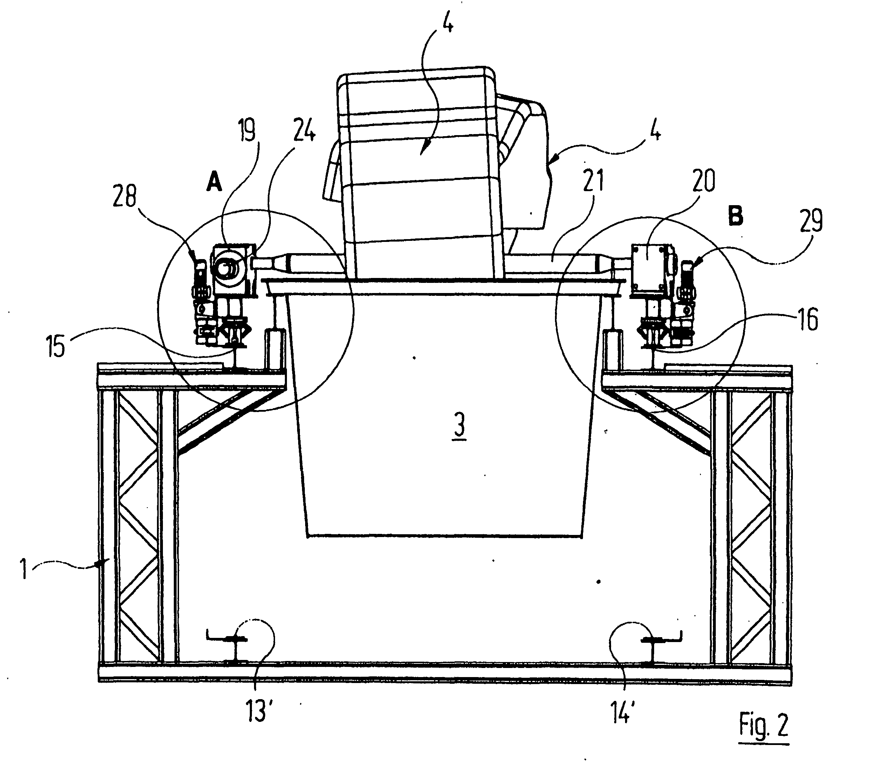

Die Doppelräder 9, 10 rollen auf einer ersten Lauffläche 13 und die Doppelräder 11, 12 auf einer hierzu parallen zweiten Lauffläche 14 ab. Die Laufflächen 13, 14 sind ihrerseits auf jeweils einem I-Profilträger 15, 16 montiert, der von dem Stahlbau 1 getragen wird (vgl. insbesondere Figur 2).

In der Mitte der in Figur 6 unteren, ersten Lauffläche 13 ist eine Führungsrippe 17 angebracht, die von eine komplementäre Ausnehmung aufweisenden Führungsgliedern 18 übergriffen wird. Jeweils ein Führungsglied 18 ist mit dem Drehschemel eines zugeordneten Doppelrads 9 bzw. 10 so verbunden, daß es dieses Doppelrad 9 bzw. 10 entsprechend dem Verlauf der Führungsrippe 17 um die vertikale Achse verdreht. Auf diese Weise folgen die Doppelräder 9, 10 der ersten Lauffläche 13. Die der zweiten, in Figur 6 oberen Lauffläche 14 zugeordneten Doppelräder 11, 12 dagegen sind als reine Nachlaufräder konzipiert; das heißt, es sind keine gesonderten Führungsmittel zur Beeinflussung der Winkellage der Räder um deren vertikale Drehachse vorgesehen. Auf diese Weise können die Genauigkeitsanforderungen an die Führungsmittel, mit denen die Transportwagen 5 auf den Laufflächen 13, 14 gehalten werden, gering gehalten werden.

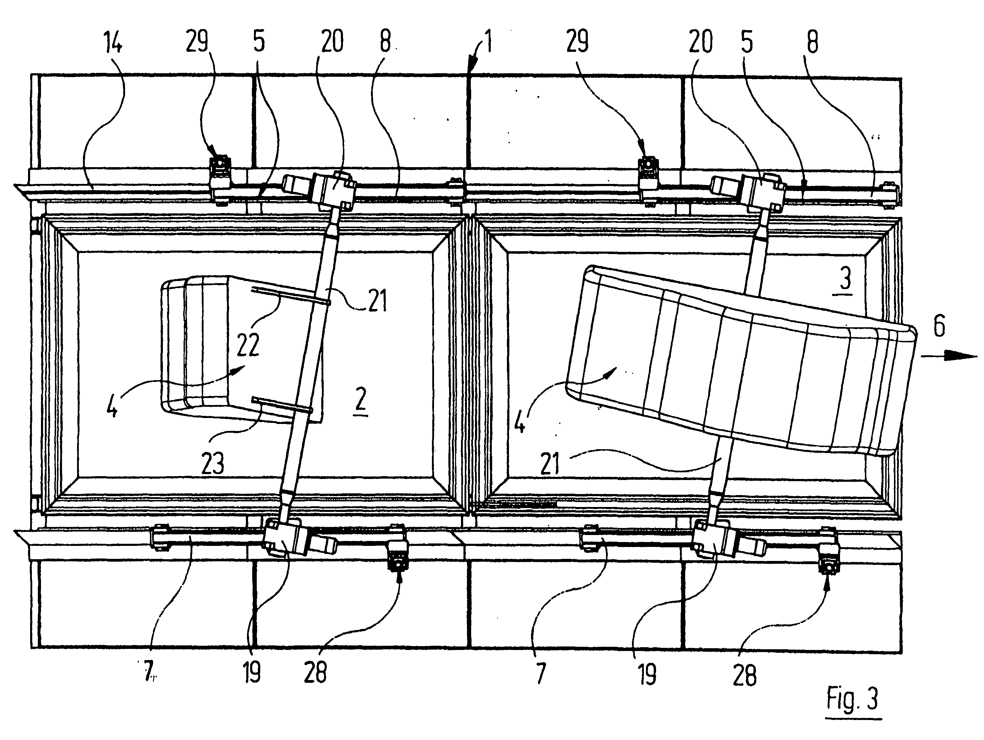

In der Mitte der beiden Längstraversen 7, 8 der Transportwagen 5 ist jeweils ein Getriebeblock 19 bzw. 20 um eine vertikale Achse verdrehbar montiert, deren Abtriebswellen durch eine Drehwelle 21 verbunden sind. Wie insbesondere Figur 3 zeigt, sind die beiden Längstraversen 7, 8 des Transportwagens 5 in Transportrichtung gegeneinander etwas versetzt; die in Figur 3 obere Längstraverse 8 eilt der unteren Längstraverse 7 etwas voraus. Das Ausmaß dieses Vorauseilens ist einstellbar. Die Drehwelle 21 des Transportwagens 5 verläuft daher unter einem schrägen, von 90° abweichenden Winkel zur Transportrichtung, die mit der Richtung der beiden Laufflächen 13, 14 übereinstimmt. Die Größe dieses Winkels hängt von dem Ausmaß ab, in dem die eine Längstraverse 8 der anderen Längstraverse 7 vorauseilt und wird nach der Geometrie der zu lackierenden Fahrzeugkarosserie 4 gewählt. Ist die richtige Größe eingestellt, wird die Verdrehbarkeit der Getriebeblocks 19, 20 auf den Längstraversen 7, 8 blockiert, sodaß der Transportwagen 5 nunmehr eine in sich starre Einrichtung wird.

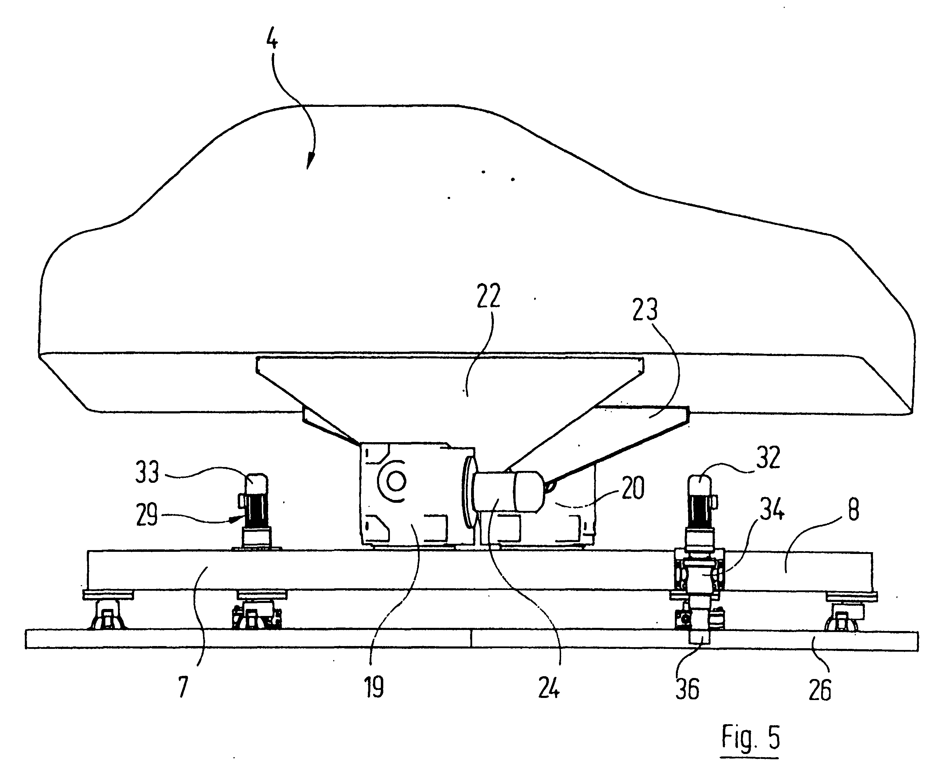

Auf der Drehwelle 21 sind in Abstand zueinander zwei Befestigungsplatten 22, 23 befestigt, die in der Seitenansicht eine Dreiecksform haben. Die normalerweise nach oben zeigenden, längsten Kanten dieser Dreiecke sind gleich lang. Die Höhen dieser Dreiecke sind jedoch unterschiedlich: Die in den Figuren 5 und 6 weiter hinten liegende Befestigungsplatte 23 ist etwas niedriger als die in diesen Figuren vordere Befestigungsplatte 22. Auf den nach oben zeigenden Kanten der Befestigungsplatten 22, 23 ist eine Fahrzeugkarosserie 4 in geeigneter, nicht dargestellter Weise befestigt. Diese ist somit gegenüber ihrer normalen Ausrichtung in doppelter Weise verkippt: Durch die ungleiche Höhe der Befestigungsplatten 22, 23 verläuft die Unterseite der Fahrzeugkarosserie 4 nicht mehr horizontal; die Mittelebene der Fahrzeugkarosserie 4 steht nicht mehr vertikal. Außerdem verläuft die Mittelebene der Fahrzeugkarosserie 4 nicht mehr parallel zur Transportrichtung sondern in einem spitzen Winkel zu dieser.

An die Getriebeblocks 19, 20 ist jeweils ein Elektromotor 24 bzw. 25 angeflanscht. Die Anordnung ist so, daß bei Bestromung der Elektromotoren 24, 25 die Drehwelle 21 in einer bestimmten Richtung verdreht wird, wobei in sie Kräfte von beiden Seiten her eingeleitet werden.
Die Verdrehung der Drehwelle 21 ist von einer entsprechenden Verdrehung der Fahrzeugkarosserie 4 um die Achse der Drehwelle 21 begleitet.

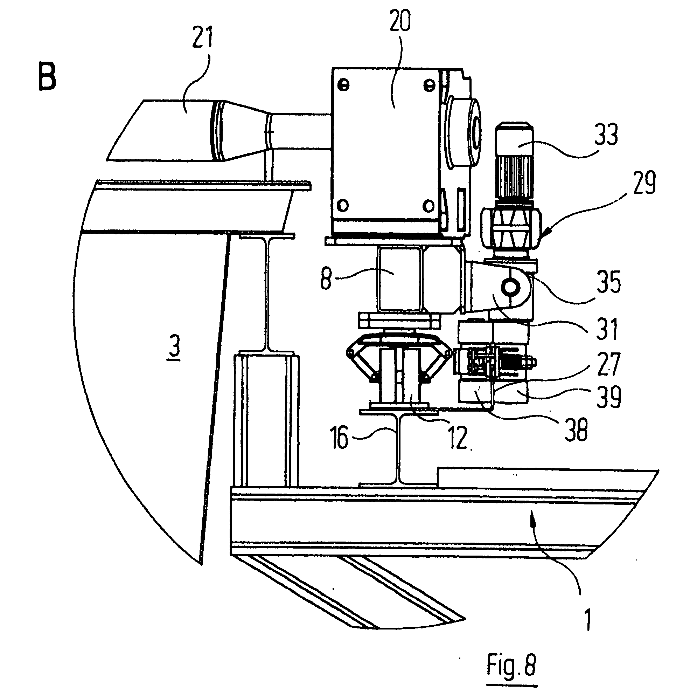

Die Doppelräder 19 bis 12 der Transportwagen 5 sind selbst nicht angetrieben. Der Vorwärtstrieb der Transportwagen 5 erfolgt vielmehr über einen gesonderten Antrieb, der nachfolgend anhand der Figuren 6 bis 8 näher erläutert wird.

Parallel zu den beiden Laufflächen 13, 14 erstrecken sich zwei senkrecht ausgerichtete, stationäre Antriebsflansche 26, 27. Diese wirken jeweils mit einem Preßrollenantrieb 28 bzw. 29 zusammen, der an der Seitenfläche der benachbarten Längstraverse 7, 8 mittels einer Lasche 30 bzw. 31 befestigt ist. Die Preßrollenantriebe 28, 29 umfassen jeweils einen elektrischen Antriebsmotor 32, 33 und ein Antriebsgetriebe 34, 35. Letzteres treibt die parallelen, vertikalen Achsen zweier Preßrollen 36, 37 bzw. 38, 39 an, die von beiden Seiten her gegen den jeweils zugeordneten Antriebsflansch 26 bzw. 27 angepreßt werden. Werden die Antriebsmotoren 32, 33 bestromt, laufen die Preßrollen 36, 37 bzw. 38, 39 auf den jeweiligen Seitenflächen der Antriebsflansche 26, 27 ab und bewegen dabei den Transportwagen 5 auf den Laufflächen 13, 14 vorwärts.

Jeder Transportwagen 5 umfaßt seine eigene Wagensteuerung, unter deren Regime er sowohl seine Translationsbewegung entlang der Laufflächen 13, 14 als auch die Drehbewegung der Fahzeugkarosserien 4 um die Achse der Drehwelle 21 ausführt. Auch die Einstellung des "Vorlaufs", mit dem die eine Längstraverse 8 im Betrieb der anderen Längstraverse 7 des entsprechenden Transportwagens 5 vorauseilt, kann unter der Kontrolle dieser Wagensteuerung erfolgen.

Die Funktion der oben beschriebenen Tauchlackieranlage insgesamt ist wie folgt:

Die zu lackierenden Fahrzeugkarosserien 4 werden jeweils auf einen eigenen Transportwagen 5 aufgesetzt; der richtige Winkel, unter dem die Drehwelle 21 stehen soll, wird durch Einstellen des Vorlaufes der einen Längstraverse 8 gegenüber der anderen Längstraverse 7 herbeigeführt und fixiert. Nun werden die Fahrzeugkarosserien 4 den Bädern 3, 4 nacheinander auf ihren Transportwagen 5 zugeführt. Hat das vorauseilende Ende einer Fahrzeugkarosserie 4 den Beginn des in Transportrichtung 6 ersten Bades 2 erreicht, entscheidet die Wagensteuerung, ob diese Fahrzeugkarosserie 4 in dieses Bad 2 eingetaucht werden soll. Wird dies bejaht, werden die Elektromotoren 24, 25 bestromt. In Abstimmung mit der Geschwindigkeit der Translationsbewegung, die durch die Preßrollenantriebe 28, 29 vorgegeben wird, werden die Elektromotoren 24, 25 bestromt und die Fahrzeugkarosserie 4 um die Achse der Drehwelle 21 verdreht und in den im Bad 2 enthaltenen Lack eingetaucht. Aufgrund ihrer doppelten Verkippung durchlaufen die Fahzeugkarosserien 4 dabei eine Art Taumelbewegung, die besonders gut in den Figuren 1 bis 3 erkennbar ist. Hierdurch läßt sich erreichen, daß die Fahrzeugkarosserie 4 nicht mit der gesamten Vorderseite gleichzeitig in das Lackbad eintaucht, was mit einem erheblichen mechanischen Schlag verbunden sein und erhebliche Kraft erfordern kann. Taucht die Fahrzeugkarosserie 4 statt dessen mit einem vorstehenden Eck, zum Beispiel mit dem oberen Eck eines Kotflügels, voraus in das Lackbad ein, wird letzteres strömungsgünstig beim weiteren Eintauchvorgang zerteilt; der Eintauchvorgang läßt sich glatt mit deutlich geringerem Kraftaufwand abwickeln. Befindet sich in dem zuerst eintauchenden Bereich der Fahrzeugkarosserie 4 zudem eine Öffnung, z.B. eine Scheinwerferöffnung, so kann der Lack definiert in die inneren Hohlräume der Fahrzeugkarosserie 4 eindringen und die dort vorhandene Luft über andere, noch nicht eingetauchte Öffnungen verdrängen. Alle inneren Flächen der Fahrzeugkarosserie 4 werden gut benetzt.

Je nach Wunsch kann die Translationsbewegung des Transportwagens 5 bei eingetauchter Fahrzeugkarosserie 4 verlangsamt oder angehalten und die Fahrzeugkarosserie 4 einer Schaukelbewegung unterzogen werden, indem die Elektromotoren 24, 25 abwechselnd gegensinnig bestromt werden. Nach der gewünschten Verweilzeit im Bad 2 wird die Fahrzeugkarosserie 4 durch Betätigung der Elektromotoren 24, 25 und Verdrehung um die Achse der Drehwelle 21 wieder aus dem Bad 2 herausgehoben.

Bei Bedarf kann die Fahrzeugkarosserie 4 oberhalb des Bades 2 durch entsprechende Bestromung der Elektromotoren 24, 25 in unterschiedliche Winkelpositionen gebracht werden, um ein möglichst vollständiges Auslaufen und Abtropfen des Lacks in das zugeordnete Bad 2 zu ermöglichen und auf diese Weise die Verschleppung von Lack zu minimieren. Sodann wird durch Betätigung der Preßrollenantriebe 28, 29 die. Translationsbewegung des Transportwagens 5 wieder aufgenommen, ggfs. mit höherer Geschwindigkeit, bis die Fahrzeugkarosserie 4 das in Bewegungsrichtung zweite Bad 3 erreicht hat. Dort können dieselben Vorgänge erneut ablaufen, wie dies für das erste Bad 2 beschrieben wurde.

In bestimmten Lackieranlagen folgen unterschiedliche Fahrzeugkarosserien 4 aufeinander, die in unterschiedlicher Weise behandelt werden müssen. Dies ist mit der beschriebenen Lackieranlage ohne weiteres möglich. Beispielsweise kann ein Bad 2, 3 vollständig überfahren werden; die Fahrzeugkarosserie 4 kann auch mit einer rückwärts gerichteten, kombinierten Dreh- und Translationsbewegung in das fragliche Bad 2, 3 eingetaucht werden. Das "Ausheben" der Fahrzeugkarosserie 4 aus dem Bad 2, 3 kann durch Fortsetzung der Drehbewegung in dem Drehsinn geschehen, in dem der Eintauchvorgang erfolgt war; alternativ ist es auch möglich, durch Umkehr der Drehrichtung der Drehwelle 21 die Fahrzeugkarosserie 4 auf derselben Seite aus dem Bad 2, 3 wieder herauszudrehen, auf der sie zuvor eingetaucht war. Der Winkel der Drehwelle 21 läßt sich zudem für jede Fahrzeugkarosserie 4 individuell optimal einstellen.

Da, wie erwähnt, aufeinanderfolgende Fahrzeugkarosserien 4 in unterschiedlicher Weise in den Bädern 2, 3 behandelt werden können, können sich unterschiedliche Abstände zwischen aufeinanderfolgenden Transportwagen 5 einstellen. Diese unterschiedlichen Abstände können auf Wunsch durch entsprechende Beschleunigung bzw. Verzögerung aufeinanderfolgender Transportwagen 5 wieder vergleichmäßigt werden.

Am Anfang der Lackieranlage befindet sich eine nicht dargestellte Aufgabestation, an welcher die einzelnen Fahrzeugkarosserien 4 auf einen stehenden Transportwagen 5 aufgesetzt und an diesem befestigt werden. In entsprechender Weise befindet sich am Ende der Lackieranlage eine Abnahmestation, an welcher die Fahrzeugkarosserien 4 von einem stehenden Transportwagen 5 abgenommen werden. Sowohl die Aufgabe- als auch die Abnahmestation sind als Hubstationen ausgebildet. In der Abnahmestation wird der entleerte Transportwagen 5 nach unten abgesenkt, bis die Laufflächen 13, 14, die sich auch in die Abnahmestation hinein fortsetzen, mit parallelen Laufflächen 13', 14' fluchten, die sich in einem Untergeschoß des Stahlbaues 1 zurück bis zur Aufgabestation erstrecken. Die leeren Transportwagen 5 werden auf diesen Laufflächen 13', 14' unterhalb der Bäder 2, 3 entgegen der Richtung des Pfeils 6 zur Aufgabestation gebracht, was mit einer höheren Geschwindigkeit geschehen kann. In der Aufgabestation werden die Transportwagen 5 wieder auf das Niveau der oberen Laufflächen 13, 14 gebracht und, wie schon beschrieben, mit neuen zu lackierenden Fahrzeugkarosserien 4 bestückt.

Wie insbesondere der Figur 1 zu entnehmen ist, befinden sich sämtliche Fördertechnikkomponenten der beschriebenen Lackieranlage seitlich von den Bädern 2, 3, so daß die in den Bädern 2, 3 befindlichen Flüssigkeiten von diesen Fördertechnikkomponenten nicht verschmutzt werden können.

## Patentansprüche

1. Anlage zur Behandlung, insbesondere zum Lackieren, von Gegenständen (4), deren Geometrie die Richtung einer Symmetrieachse oder einer Symmetrieebene oder eine Längsrichtung aufweist, insbesondere von Fahrzeugkarosserien, mit
a) mindestens einem Bad (2, 3), in dem sich eine Behandlungsflüssigkeit, insbesondere ein Lack, befindet, in welche die Gegenstände (4) eingetaucht werden sollen;
b) einer Fördereinrichtung (5, 13, 14), mit welcher die Gegenstände (4) in einer kontinuierlichen oder intermittierenden Translationsbewegung in Transportrichtung durch die Anlage geführt werden können;
c) einer Vielzahl von Eintaucheinrichtungen (19 bis 24), die mit der Fördereinrichtung (5, 13, 14) verbunden sind, jeweils einen Gegenstand (4) tragen und in der Lage sind, diesen Gegenstand (4) durch eine Drehung um eine sich unter einem Winkel zur Transportrichtung erstreckende Drehachse (21) vollständig in das Bad (2, 3) einzutauchen, wobei die Drehachse (21) von dem Gegenstand (4) beabstandet ist,
**dadurch gekennzeichnet, daß**
d) die Eintaucheinrichtungen (19 bis 24) so ausgebildet sind, daß in derjenigen Drehposition, in der die Richtung der Symmetrieachse oder der Symmetrieebene oder die Längsrichtung des Gegenstandes (4) horizontal verläuft, die Transportrichtung unter einem schrägen Winkel zur Richtung der Symmetrieachse oder der Symmetrieebene oder zur Längsrichtung des Gegenstandes (4) verläuft.

2. Anlage nach Anspruch 1, **dadurch gekennzeichnet, daß** die Drehachse (21) in der Projektion auf eine horizontale Ebene unter einem schrägen Winkel zur Transportrichtung (6) der Transporteinrichtung (5, 13, 14) verläuft.

3. Anlage nach Anspruch 1 oder 2, **dadurch gekennzeichnet, daß** die Drehachse (21) gegenüber der Horizontalen verkippt ist.

4. Anlage nach einem der vorhergehenden Ansprüche, **dadurch gekennzeichnet, daß** der Gegenstand (4) in der Eintaucheinrichtung (19 bis 24) so montiert ist, daß seine Richtung der Symmetrieachse oder der Symmetrieebene oder seine Längsrichtung unter einem schrägen Winkel zur Drehachse (21) steht.

5. Anlage nach einem der vorhergehenden Ansprüche, **dadurch gekennzeichnet, daß** der Winkel zwischen der Transportrichtung (6) und der Richtung der Symmetrieachse oder der Symmetrieebene oder der Längsrichtung der Gegenstände (4) einstellbar ist.

## Claims

1. Installation for treating, in particular for painting, objects (4) the geometry of which has the direction of an axis of symmetry or of a plane of symmetry or a longitudinal direction, in particular vehicle bodies, comprising:
a) at least one bath (2, 3) containing a treatment liquid, in particular a paint, in which the objects (4) are to be immersed;
b) a conveying arrangement (5, 13, 14) by means of which the objects (4) can be transported through the installation in a continuous or intermittent translation movement in a transport direction;
c) a plurality of immersion arrangements (19 to 24) connected to the conveying arrangement (5, 13, 14) which in each case carry an object (4) and are able to immerse said object (4) completely in the bath (2, 3) by means of a rotation about an axis of rotation (21) extending at an angle to the transport direction, the axis of rotation (21) being located at a distance from the object (4),
**characterised in that**
d) the immersion arrangements (19 to 24) are so configured that in the rotational position in which the direction of the axis of symmetry or of the plane of symmetry or the longitudinal direction of the object (4) is disposed horizontally the transport direction is disposed at an oblique angle to the direction of the axis of symmetry or of the plane of symmetry or to the longitudinal direction of the object (4).

2. Installation according to claim 1, **characterised in that** in a projection on a horizontal plane the axis of rotation (21) is disposed at an oblique angle to the transport direction (6) of the transport arrangement (5, 13, 14).

3. Installation according to claim 1 or 2, **characterised in that** the axis of rotation (21) is tilted with respect to the horizontal.

4. Installation according to any one of the preceding claims, **characterised in that** the object (4) is mounted in the immersion arrangement (19 to 24) in such a way that the direction of its axis of symmetry or of its plane of symmetry or its longitudinal direction is disposed at an oblique angle to the axis of rotation (21).

5. Installation according to any one of the preceding claims, **characterised in that** the angle between the transport direction (6) and the direction of the axis of symmetry or of the plane of symmetry or the longitudinal direction of the objects (4) is adjustable.

## Revendications

1. Installation de traitement, notamment de peinture, d'objets (4) dont la géométrie suit la direction d'un axe de symétrie ou d'un plan de symétrie ou une direction longitudinale, notamment de carrosseries de véhicules, avec
a) au moins un bain (2, 3), dans lequel se trouve un liquide de traitement, notamment une peinture, dans lequel les objets (4) doivent être immergés,
b) un dispositif de convoyage (5, 13, 14), avec lequel les objets (4) peuvent être dirigés dans la direction de transport à travers l'installation en un mouvement de translation continu ou intermittent ;
c) une pluralité de dispositifs d'immersion (19 à 24), qui sont reliés au dispositif de convoyage (5, 13, 14), portent chacun un objet (4) et sont à même d'immerger totalement cet objet (4) dans le bain (2, 3) par une rotation autour d'un axe de rotation (21) s'étendant sous un angle par rapport à la direction de transport, l'axe de rotation (21) étant distant de l'objet (4),
**caractérisée en ce que**
d) les dispositifs d'immersion (19 à 24) sont conçus de telle sorte que, dans la position de rotation dans laquelle la direction de l'axe de symétrie ou du plan de symétrie ou la direction longitudinale de l'objet (4) s'étend horizontalement, la direction de transport s'étend sous un angle oblique par rapport à la direction de l'axe de symétrie ou du plan de symétrie ou à la direction longitudinale de l'objet (4).

2. Installation selon la revendication 1, **caractérisée en ce que** l'axe de rotation (21) s'étend, dans la projection sur un plan horizontal, sous un angle oblique par rapport à la direction de transport (6) du dispositif de transport (5, 13, 14).

3. Installation selon la revendication 1 ou 2, **caractérisée en ce que** l'axe de rotation (21) est basculé par rapport à l'horizontale.

4. Installation selon l'une des revendications précédentes, **caractérisée en ce que** l'objet (4) est monté dans le dispositif d'immersion (19 à 24) de telle sorte que sa direction de l'axe de symétrie ou du plan de symétrie ou sa direction longitudinale se trouve sous un angle oblique par rapport à l'axe de rotation (21).

5. Installation selon l'une des revendications précédentes, **caractérisée en ce que** l' angle entre la direction de transport (6) et la direction de l'axe de symétrie ou du plan de symétrie ou la direction longitudinale des objets (4) est réglable.
